# EUROPEAN PATENT APPLICATION

(11) **EP 1 954 006 A1**
(43) Date of publication of application: **06.08.2008**
(21) Application number: 07003199.2
(22) Date of filing: 15.02.2007
(51) Int. Cl.: H04L 29/08, H04H 9/00

(54) **Interactive message server**

(30) Priority: 31.01.2007 US 898634 P
(71) Applicant: Koninklijke KPN N.V., 2516 CK The Hague (NL)
(72) Inventor: Bakker, Sander, 6131 HX Sittard (NL)
(74) Representative: Wuyts, Koenraad Maria

(57) **Abstract**

A set-top box of a first subscriber facilitates the creation of a first message to alert a second subscriber to a live broadcast going on. The first message is sent to a server on the Internet. The server creates a second message based on the first message and sends it to the set-top box of the second subscriber. The set-top box of the second subscriber alerts the latter to the second message. Upon opening the second message, the second subscriber can interact with interactive features contained in the second message so as to facilitate the tuning in on the live broadcast indicated by the first subscriber.

## Description

### FIELD OF THE INVENTION

The invention relates to a method of providing a communication service via a data network.

### BACKGROUND ART

In a community, whether real or virtual, people like to share experiences and information. For example, when a person is watching a television broadcast that he/she believes is of interest to one or more friends or acquaintances, he/she would like to notify the other person about this broadcast going on. The watching person could make quick telephone calls to the others in order to alert them. This, however, is rather cumbersome to the watching person, as he/she has to withdraw his/her attention from the broadcast, find his/her telephone and the relevant telephone numbers, and then spent precious time on making the calls.

### SUMMARY OF THE INVENTION

The invention addresses above and other problems, and provides a solution that, among other things, reduces user intervention in the process of alerting other people to available content information.

To this end, the invention provides a method of providing a communication service via a data network, such as the Internet. The method comprises receiving from a user a first message via the data network. The first message comprises information about content information currently being rendered at electronic equipment of the user, and an identifier of an addressee. The method further comprises sending a second message to further electronic equipment of the addressee via the data network. The second message enables the addressee to render the content information upon a specific interaction of the addressee with the second message. The invention thus provides a service and an infrastructure to facilitate the notifying of friends and acquaintances, requiring much less user intervention than in the telephone scenario briefly discussed above.

Preferably, the method comprises providing a list of multiple addressees. The list is configured for being rendered at the electronic equipment of the user so as to let the user select one or more addressees for the second message.

The second message comprises an interactive feature that enables the addressee to render the content information upon the specific interaction with the feature. Accordingly, the first message preferably triggers the creation of the second message that is provided with interactive features so as to facilitate the interaction with the addressee.

In an embodiment of the invention, the content information comprises a live broadcast, e.g., a live TV broadcast. The second message then comprises an identifier of the live broadcast. Upon the specific interaction of the addressee with the second message, the second message controls the further electronic equipment to tune in on the live broadcast.

An example scenario according to the invention is the following. A set-top box of a first subscriber facilitates the creation of a first message to alert a second subscriber to a live broadcast going on. The first message is sent to a server on the Internet. The server creates a second message based on the first message and sends it to the set-top box of the second subscriber. The set-top box of the second subscriber alerts the latter to the second message. Upon opening the second message, the second subscriber can interact with interactive features contained in the second message so as to facilitate the tuning in on the live broadcast indicated by the first subscriber.

### BRIEF DESCRIPTION OF THE DRAWING

The invention is explained in further detail, by way of example and with reference to the accompanying drawing, wherein:
Fig.1 is a block diagram of a system in the invention;
Fig.2 is a process diagram of specific steps in a method of the invention;
Fig.3 is a block diagram of an apparatus in the system of Fig.1.

Throughout the Figures, similar or corresponding features are indicated by same reference numerals.

### DETAILED EMBODIMENTS

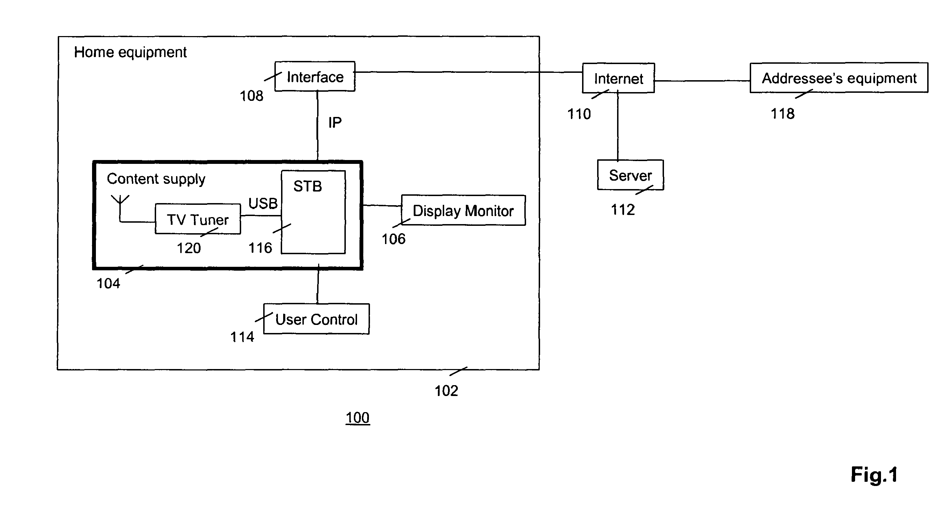

Fig.1 is a block diagram of a system 100 in the invention. System 100 comprises electronic home equipment 102 that includes a content supply sub-system 104. Sub-system 104 is connected to a display monitor 106 and to a data network interface 108 that communicates via a data network 110, e.g., the Internet, to a data center, or server, 112. System 100 further has a user control interface 114, e.g., a remote control, for enabling a user to control equipment 102 in operational use as explained below. System 100 has also further electronic equipment 118 connected to data network 110.

Content supply sub-system 104 comprises, e.g., a set-top box (STB) 116 connected to a TV tuner 120 with a USB port. Sub-system 104 may also comprise a home media storage (not shown) that stores and/or processes the user's personal content information, such as home videos, video games, slide show, photograph pictures, DVDs, CDs, etc. Interface 108 comprises, e.g., a modem for Internet protocol (IP) data traffic.

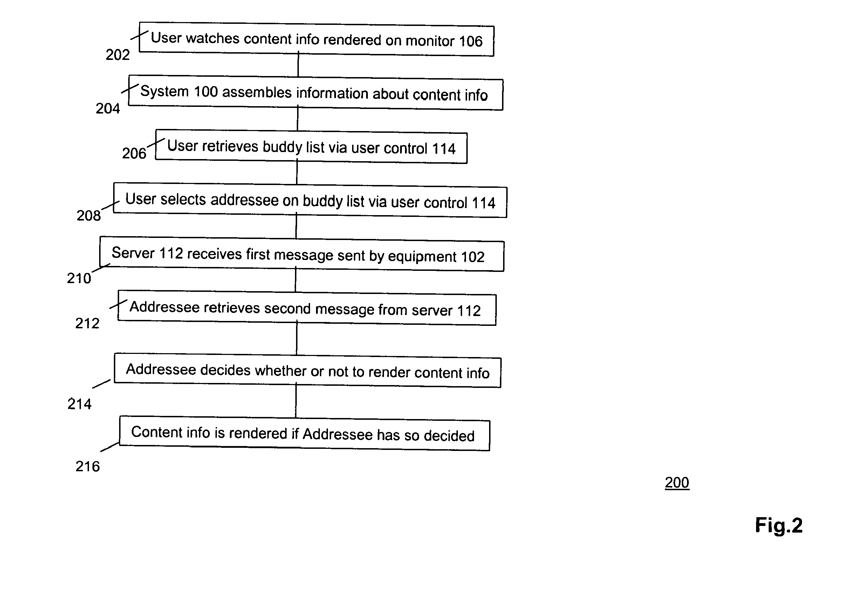

Fig.2 is a process diagram illustrating the invention's functionality within the context of a service 200 provided in system 100 of Fig.1.

In a step 202, the user of equipment 102 is watching content information being rendered on display monitor 106, or is listening to content information being played out on a loudspeaker (not shown).

In a step 204, system 100 assembles information (meta-information) about the content information being rendered. This can be done locally at equipment 102. For example, the content information is a live broadcast and the meta-information regarding this live broadcast can be retrieved, e.g., from side band information contained in the broadcast or from an electronic program guide (EPG). The EPG in this example contains the meta-information per program item per channel in a grid-like overview rendered on display monitor 106. Alternatively, the assembling of the meta-information can be achieved by having equipment 102 send to server 112 an identifier of the content information that is currently being rendered. The identifier comprises, e.g., channel number of the broadcast currently being watched and the local time, thus enabling server 112 to identify the broadcast via a program guide. The channel number can be provided by STB 116 directly or by interpreting the control commands from user control 114. As another example, the identifier comprises the identifier of a CD or DVD being played out, or the local address of an electronic file stored at equipment 102, etc.

In a step 206, the user retrieves a buddy list from system 100 by means of a specific user interaction through user control 114. Preferably, user control 114 has a dedicated user input feature for initiating the retrieval of the list. For example, user control 114 comprises a remote control device with dedicated buttons to facilitate user control over the process. The buddy list is, e.g., a personal list of the user that lists names or nicknames of other users having their home equipment (here, e.g., equipment 118) also connected to server 112 via data network 110. Each name on the list has a specific network address. The list may reside at home equipment 102, e.g., at STB 116. Alternatively, the list resides at server 112 and gets retrieved through home equipment 102, e.g., STB 116, upon a specific user interaction with user control 116. In yet another embodiment, the list of names resides at equipment 102, and its associated list of network addresses resides at server 112 in the form of, e.g., an associated look-up table. The latter embodiment may, to some extent, have advantages with regard to privacy. The buddy list has preferably been compiled by the user him/herself in a configuration mode of home equipment 102. Alternatively, the buddy list has been compiled by server 112 upon user input, e.g., through a dedicated web site. The list is preferably rendered on monitor 106 at which the content information is being played out.

In a step 208, the user selects a name or addressee appearing on his buddy list. Selection may again be performed through a dedicated user interaction through user control 114, e.g., by means of up/down arrows on the keypad of user control 114 so as to move a highlight up or down the buddy list, and an "enter" key to confirm selection, or via a suitably configured universal touch screen remote control.

In a step 210, equipment 102, e.g., STB 116, compiles a first message and sends it to server 112. The first message identifies the addressee or multiple addressees selected by the user of equipment 102 in step 208, and also identifies the content information currently being rendered at home equipment 102. Preferably, the user can add some personal remarks to the message, e.g., selected from a menu displayed together with, or in association with the buddy list, and prepared in advance. A typical remark is: "please watch <program title> on channel <channel number or call sign>". The entities "program title" and "channel number or call sign" are filled in by system 100, e.g., by STB 116, as the content information being rendered at the user is known to system 100. Alternatively, the user types in a message via a keyboard included in user control 114. When the buddy list has been retrieved, STB 116 is in an operational mode wherein it interprets the keystrokes as text for being included in the message.

In a step 212, a second message can be retrieved from server 112 by the addressee on his/her home equipment 118, e.g., his/her STB (not shown). While addressee's home equipment 118 has been turned off or is in a sleep mode, addressee's home equipment 118 preferably provides an indication that a message of this type has been available. The addressee can respond by a specific interaction with equipment 118 in order to retrieve the message. For example, the addressee has an STB (not shown), compatible to STB 116, and contributing to providing the service according to this invention. This STB has lights in its front panel or other visual indicators that alert the addressee to the fact that a new message has been available. If the addressee then turns on his/her home equipment 118, the display monitor (not shown) of his/her home equipment 118 shows an icon that the addressee may click on via his/her user control interface (not shown) in order to have the message retrieved and displayed. Alternatively, if the message is received while addressee's home equipment 118 is turned on, home equipment 118 renders an icon on an active display monitor, with which an interaction of the addressee enables the message to be rendered. Preferably, the icon and the message are rendered on addressee's display monitor so as to be not too intrusive. For example, the icon and/or message are rendered in a strip at the top of the active display area.

The first message sent by equipment 102 to server 112 and the second message retrieved by equipment 118 from server 112 are not necessarily identical. For example, if the user of equipment 102 has selected multiple addressees from the buddy list, each of the selected addressees needs not get informed about who else is getting an alert from this user about the same content information. As another example, the first message comprises identifiers of the addressees, and an identifier of the relevant content information. The meta-information can, but need not, be compiled at equipment 102 itself. The meta-information can, in another embodiment of the invention, also be compiled at server 112 once the identifier of the content information is known, and then inserted into the second message. As yet another example, the second message preferably has interactive features to facilitate the interaction between the addressee and the service upon receipt by the addressee.

In a step 214, the addressee selects whether or not to have the content information, indicated in the message, rendered. To this end, the message may have, for example, a submenu with first and second graphical buttons. The first button is for starting the process for rendering, the second button is for discarding the second message, both under script-control. Other buttons may be available, e.g., for sending a "thank you"-reply to the user who initiated the buddy alert process, or for requesting comments, or for continuing a dialog during the rendering, etc.

In a step 216, if the addressee has decided to have the content information rendered, interaction by the addressee with a first one of the buttons initiates a process, wherein the content information indicated in the message is being played out. If the content information indicated is a currently broadcasted television program, addressee's home equipment 118, e.g., his/her STB, retrieves the channel number or call sign from the message and switches his/her television set (not shown) to the program indicated. If the content indicated is personal content information of the user of equipment 102, addressee's home equipment 118 retrieves the identifier for this content information. If the identifier is a local network address at home equipment 102 of the user who initiated the buddy alert process, the addressee is enabled to download, via server 112, an electronic file of content information that has been identified as currently being rendered by the user of equipment 102.

Process 200 in Fig.2 shows step 204 preceding steps 206 and 208. Alternatives are that step 204 starts assembling information upon step 206, wherein the user retrieves the buddy list, or upon step 208, wherein the user selects an addressee from the buddy list. The step of assembling information is then carried out after the user has indicated to equipment 102 that he/she intends to send a first message to server 112 for alerting one or more addressees on the buddy list. An advantage of the alternatives is that information assembly does not go on all the time and only starts upon having determined that the user is preparing for sending the first message, thus saving computing power and/or processing bandwidth.

In an embodiment of the invention, server 112 may be replaced with a plurality of servers. The intention is that all messages of the type discussed above and sent by users from their respective electronic equipment, are guaranteed to arrive on all servers. This way, it does not matter to which one of the plurality of servers a message is being sent. Each particular one of the listed addressees of all buddy lists combined has respective electronic equipment that can be configured to request the next message, intended for this particular addressee, to be received on startup of his/her equipment. This means that messages are delivered immediately to the addressees. Messages are received in such a manner that they are delivered to the intended addressees exactly once (after a reboot, messages can be repeated when requested).

The second message to the addressee may be rendered on a display monitor as a graphical overlay over other content information that the addressee is currently watching. Preferably, the second message is rendered in a way so that it is not obscuring the content that the addressee is currently watching him/herself. The screen real-estate for the second message is therefore preferably relatively small compared to the active area of the display. Alternatively, or in combination with the previous option, a semi-transparent overlay can be used.

In above embodiments, the process is initiated by the user of equipment 100, who wants to alert a buddy to specific content currently available. The infrastructure required for providing a service to carry out above processes can equally well be used for broadcasting or multicasting public notifications, e.g., in case of raising an alarm in a community, e.g., the threat of a looming disaster such as caused by an approaching thunderstorm or tornado, a large-scale accident, etc. The initiator is then not necessarily a user of electronic home equipment watching a particular broadcast, but is, e.g., a community official who instructs server 112 to multicast the message to specific people on the list to whom the alarm could be relevant. Similarly, advance notifications can be sent to relevant parties on the buddy list in case of upcoming programs that the initiator believes could be of interest to these parties known to the initiator. The upcoming programs of interest could be determined through, e.g., an EPG. This has the advantage that the meta-information about the programs is available from the EPG and in electronic format that can either be pasted in the message to be distributed or be identified through a pointer inserted in the message to be distributed. In the latter case the EPG may reside at server 112 or another server (not shown).

Preferably, the service through server 112 is based on a subscription fee. Server 112 keeps history logs of the subscribers, who have been initiating and/or receiving the messages, for, e.g., billing or problem reporting purposes.

Preferably, the notification of the addressee via data network 110 and server 112 is practically instantaneous for all practical purposes. Note that there are conventional email services that may introduce delays and thereby render a service in accordance with the invention less attractive as the real-time aspect in the sharing of information may get lost.

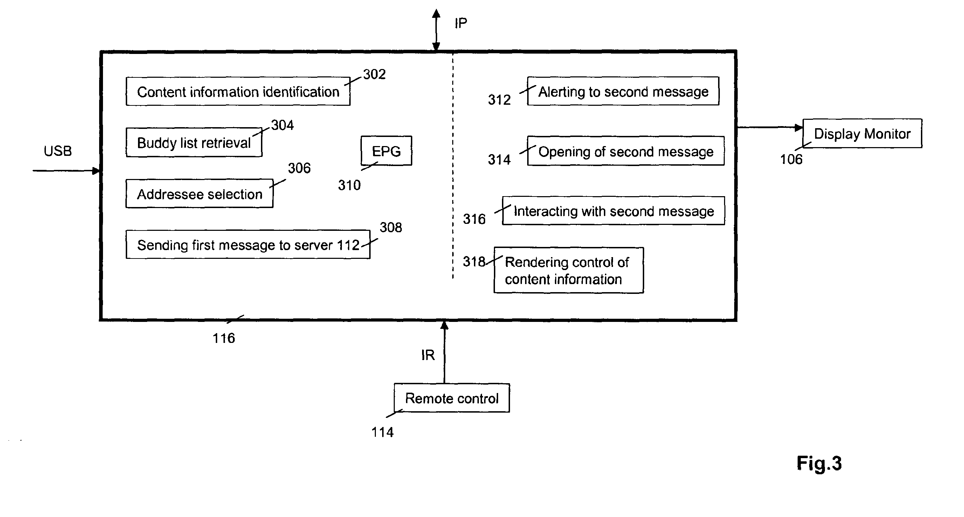

Fig.3 is a more-detailed block diagram of electronic apparatus 116, in this example an STB, forming a functional component of system 100 discussed above. A general-purpose computer with suitable software and an IR (infra-red) eye could fulfill the role of STB 116 as well. Apparatus 116 is assumed to be capable of sending first messages to server 112 and of retrieving or receiving second messages from server 112. Users having subscribed to the service explained above thus can be provided with a uniform apparatus for the interactive messaging according to the invention.

Apparatus 116 comprises first means 302 for identifying the content information being currently rendered via apparatus 116 as explained above; second means 304 for retrieving a list of addressees upon receiving a first user command from user control 114, here an IR remote control device; third means 306 for selecting one or more of the addressees upon receipt of a second user command from remote control 114; and fourth means 308 for, upon receipt of a third user command from remote control 114, sending via data network 110 to server 112 the first message identifying the one or more selected addressees and identifying the content information. Preferably, apparatus 116 is configured for processing content information in the form of a live broadcast and comprises an EPG 310 to facilitate assembling the meta-information about a program being currently watched, as explained above. Means 302-310 are preferably implemented using software, running on a dedicated STB or a general-purpose PC, although some or all of means 302-310 could be implemented in hardware.

Preferably, apparatus 116 also comprises fifth means 312 for alerting the user to a new second message addressed to him/her. Apparatus also has sixth means 314 for opening the second message, seventh means 316 for interacting with the second message and eighth means 318 for control of the rendering of the content information identified in the second message. User interaction is accomplished, e.g., through remote control 114. Means 312-318 are preferably implemented using software, although some or all of means 312-318 could be implemented in hardware.

As is clear form above description, the combined functionalities of system 100 that enable to run a service according to the method of the invention, can be distributed among various physical entities, e.g., apparatus 116, server 112, and in various different manners. Above examples give only a few implementations. The distribution of the required functionalities between physical entities may be determined by e.g., costs, efficiency, user-friendliness, maintenance and support issues, quality of service issues, etc. The considerations leading to a desired distribution all fall within the competencies of the skilled person.

## Claims

1. A method of providing a communication service via a data network (110), the method comprises:
receiving (210) from a user a first message via the data network, wherein the first message comprises information about content information currently being rendered at electronic equipment (102) of the user, and an identifier of an addressee; and
sending (212) a second message to further electronic equipment (118) of the addressee via the data network, wherein the second message enables the addressee to render the content information upon a specific interaction of the addressee with the second message.

2. The method of claim 1, comprising providing a list of multiple addressees, the list being configured for being rendered at the electronic equipment of the user so as to let the user select one or more addressees for the second message.

3. The method of claim 1, wherein the second message comprises an interactive feature that enables the addressee to render the content information upon the specific interaction with the feature.

4. The method of claim 1, wherein:
the content information comprises a live broadcast;
the second message comprises an identifier of the live broadcast; and
upon the specific interaction of the addressee with the second message, the second message controls the further electronic equipment to tune in on the live broadcast.

5. An electronic apparatus (116) comprising:
first means (302) for identifying content information being currently rendered via the apparatus;
second means (304) for retrieving a list of addressees upon a first user command;
third means (306) for selecting one or more of the addressees upon a second user command;
fourth means (308) for, upon a third user command, sending via a data network (110) to a server (112) a first message identifying the one or more selected addressees and identifying the content information.

6. The apparatus of claim 5, wherein the content information comprises a live broadcast and wherein the apparatus comprises an EPG (310).
